# EUROPÄISCHE PATENTSCHRIFT

(11) **EP 3 740 945 B1**
(45) Veröffentlichungstag und Bekanntmachung des Hinweises auf die Patenterteilung: **17.07.2024**
(21) Anmeldenummer: 19702185.0
(22) Anmeldetag: 11.01.2019
(51) Int. Cl.: G08C 17/02, G08C 19/00

(54) **VERFAHREN ZUR INSTALLATION EINES LÜFTERS**
METHOD FOR INSTALLING A BLOWER
PROCÉDÉ D'INSTALLATION D'UN VENTILATEUR

(30) Priorität: 15.01.2018 DE 102018100718
(43) Veröffentlichungstag der Anmeldung: 25.11.2020
(73) Patentinhaber: GCS GmbH, 89584 Ehingen Heufelden (DE)
(72) Erfinder: HÜGLE, Markus, 89584 Ehingen Heufelden (DE)
(74) Vertreter: Hentrich Patent- & Rechtsanwaltspartnerschaft mbB
(86) Internationale Anmeldenummer: PCT/EP2019/050612
(87) Internationale Veröffentlichungsnummer: WO 2019/138026

(56) Entgegenhaltungen:
- WO-A1-2008/097992
- WO-A1-2015/032679
- US-A1- 2015 372 875

## Beschreibung

Die Erfindung betrifft ein Verfahren zu Installation eines Lüftersystems.

Im Stand der Technik ist ein Lüftersystem für Reinräume beispielsweise in der DE 20 2016 104 114 U1 beschrieben. Darin bilden eine Vielzahl von Lüftern ein Netzwerk, wobei die Lüfter innerhalb des Netzwerks mit einer Steuer- und Bedieneinheit drahtlos oder drahtgebunden kommunizieren. Nachteilig bei diesem Lüftersystem ist, dass es beim Ausfall eines einzelnen Lüfters zum Ausfall gesamter Datenkommunikationswege kommen kann und dadurch eine Mehrzahl an Lüftern nicht mehr durch die Steuer- und Bedieneinheit ansteuerbar sind. Weiterhin ist die Größe des Lüftersystems bzw. des Netzwerks beschränkt auf den Bereich, in dem eine drahtgebundene Verbindung zur Verfügung steht oder auf einen Empfangsbereich der drahtlosen Verbindung.

Die WO 2008/097992 A1 zeigt ein Lüftersystem, welches mehrere Dachaufsätze aufweist, wobei die Dachaufsätze jeweils über einen Ventilator verfügen. Weiterhin sind Elemente vorgesehen, die mit den Dachausätzen assoziiert sind und die zu einem MESH-Netzwerk verbunden sind, wobei immer ein MESH-Access-Point mit einem Lüfter verbunden ist. Um folglich ein großes Lüftersystem aufzubauen werden eine große Anzahl von MESH-Access-Points gebraucht.

Die US 2015372875 A1 offenbart ein Smarthome 1900 mit mehreren MESH-Netzwerkelementen die zu einem MESH-Netzwerk 100 verbunden werden können. Dabei sind Endelemente vorhanden. Die nur mit einem Router, nicht aber mit weiteren Endelementen verbindbar sind.

Die WO 2015032679 A1 offenbart ein einen RFID Tag aufweisendes kontrollierbares Element, mit einem Speicher zur Speicherung einer Identifikationsadresse und mit einer Sende- und Empfangseinheit zum Enden und Empfangen der Identifikationsadresse.

Es ist daher Aufgabe der vorliegenden Erfindung ein Verfahren zur Installation eines Lüftersystems bereitzustellen, bei dem die Anzahl der Elemente innerhalb des Lüftersystems reduziert ist.

Ein Lüftersystem, insbesondere für einen Reinraum, weist eine Steuer- und Bedieneinheit zur Steuerung einer Mehrzahl von Lüftern auf, wobei mindestens ein mit der Steuer- und Bedieneinheit drahtlos oder drahtgebunden in Kontakt stehender MESH-Access-Point vorgesehen ist, der ausgebildet ist ein MESH-Netzwerk aufzubauen, derart, dass mindestens einer der Lüfter eine drahtlose oder drahtgebundene MESH-Verbindung mit dem MESH-Access-Point aufweist und dass jeder der Lüfter drahtlos oder drahtgebunden mit mindestens einem weiteren Lüfter verbindbar ist für eine Datenübertragung zwischen den Lüftern und der Steuer- und Bedieneinheit. Insbesondere ist ein zu einem Lüfter benachbarte innerhalb desselben MESH-Sende- und Empfangsbereich liegender Lüfter als ein Zwischenlüfter gebildet, der mit dem Lüfter verbindbar ist und als ein Datenknotenpunkt dient.

Durch den Aufbau eines MESH Netzwerks können die Lüfter des Lüftersystems miteinander und über mindestens einen MESH-Access-Point mit der Steuer- und Bedieneinheit drahtlos oder drahtgebunden verbunden werden. Dies schafft eine Mehrzahl von Datenverbindungswegen, so dass der Ausfall eines einzelnen Lüfters durch einen der anderen möglichen Datenverbindungswege kompensiert werden kann. Darüber hinaus ist die Größe des Netzwerks und damit des Lüftersystems nicht auf den Empfangsbereich, d.h. einen MESH-Sende- und Empfangsbereich, des MESH-Access-Points beschränkt, sondern kann mit Hilfe zusätzlicher drahtlos oder drahtgebundenen Verbindungen von Lüftern am Rand des MESH-Sende- und Empfangsbereichs mit einem Lüfter außerhalb des MESH-Sende- und Empfangsbereichs beliebig erweitert werden.

Das MESH Netzwerk genügt dabei bevorzugt dem Standard IEE 802.11S, so dass die Lüfter untereinander ein drahtloses MESH-Netzwerk aufbauen und Frames für die Lüfter außerhalb des MESH-Sende- und Empfangsbereichs weiterleiten. Als WLAN-Access-Point, d.h. als MESH-Access-Point, kann beispielsweise ein NEXCOM^{®} IWF 300 dienen.

In einem bevorzugten Beispiel ist es vorgesehen, dass die benachbarten Lüfter drahtlos miteinander verbunden sind, dass jedem Lüfter ein drahtloser Sende- und Empfangsbereich zugeordnet ist und dass die Lüfter derart zueinander angeordnet sind, dass sich innerhalb ihres räumlichen Sende- und Empfangsbereich mindestens ein weiterer Lüfter oder ein MESH-Access-Point befindet. Durch eine drahtlose Verbindung kann das Lüftersystem flexibler ausgestaltet und leichter installiert werden. Fehlerquellen bei der Installation durch falsche Verkabelungen zwischen den Lüftern und/oder zwischen den Lüftern und der Steuer- und Bedieneinheit werden vermieden. Gleichzeitig wird eine bedienerfreundlichere Steuerung der Lüfter ermöglicht. Aufgrund der Vielzahl an möglichen Datenverbindungswegen bei einer drahtlosen Verbindung der Lüfter kann ein Ausfall einer Gruppe von Lüftern oder auch des ganzen Netzwerks aufgrund des Ausfalls eines einzelnen Lüfters mit der Unterbrechung des nebengeordneten Datenverbindungsweges verhindert werden.

Um das Lüftersystem und damit das Netzwerk beliebig vergrößern zu können und um die Erreichbarkeit jedes einzelnen Lüfters weiter zu erhöhen ist es bevorzugt, wenn eine Mehrzahl von MESH-Access-Points mit jeweils einem MESH-Sende- und Empfangsbereich vorgesehen sind, die derart zueinander angeordnet sind, dass jeweils zumindest zwei MESH-Sende- und Empfangsbereiche sich zumindest teilweise überschneiden. Alternativ können auch eine Mehrzahl von MESH-Sende- und Empfangsbereiche sich zumindest teilweise überschneiden oder alle MESH-Sende- und Empfangsbereiche aller MESH-Access-Points sich zumindest teilweise überschneiden.

Beispielsweise ist es weiterhin vorgesehen, dass die Steuer- und Bedieneinheit als ein Building Management System (BMS) gebildet ist und dass ein BMS-Gateway vorgesehen ist zur Datenübertragung zwischen einem der MESH-Access-Points und dem Building Management System. Der BMS-Gateway ermöglicht die Installation oder die Einrichtung des Lüftersystems in Gebäuden mit bereits vorhandenen BMS. Das Lüftersystem wird somit kompatibel zu bereits bestehenden BMS, wodurch die Einsatzmöglichkeiten des Lüftersystems erhöht werden. Der BMS-Gateway dient dabei sowohl als "Übersetzer" zwischen dem MESH-Access-Point und dem BMS, kann aber in einer bevorzugten Ausführungsform derart ausgebildet sein, Informationen zu sammeln um statistische Auswertungen und Analysen zu ermöglichen bzw. zu vereinfachen. Beispielsweise kann der BMS-Gateway Statistiken über die Anzahl der aufgetretenen Fehler pro Zeiteinheit, pro Lüfter und/oder pro Lüftergruppe, sowie Statistiken über die Betriebsparameter einer Lüftergruppe sammeln. Dazu weist die Steuer- und Bedieneinheit oder der BMS-Gateway bevorzugt zusätzlich eine Modbus-TCP/IP Schnittstelle auf zur direkten Kommunikation mit den Lüftern des Lüftersystems, die ebenfalls jeweils über eine Modbus TCP/IP Schnittstelle verfügen. In einer weiteren bevorzugten Ausführungsform kann der BMS-Gateway Sicherheitsmechanismen aufweisen, die einen unbeabsichtigten oder unerlaubten Zugriff auf die Lüfter verhindert.

Unter einem Datenknotenpunkt wird ein Punkt verstanden, an dem die Kommunikation mehrerer Lüfter zusammenläuft. Folglich kann der Zwischenlüfter Daten, beispielsweise über den Betriebsmodus des mit ihm verbundenen Lüfters und/oder Fehlermeldungen vom Lüfter empfangen und an den mit ihm ebenfalls verbundenen MESH-Access-Point oder an einen mit ihm verbundenen weiteren Lüfter weiterleiten. Umgekehrt dient der Zwischenlüfter der Weiterleitung von Daten wie beispielsweise Anweisungen über eine Änderung des Betriebsmodus und/oder einen Neustart von einem MESH-Access-Point oder von einem mit ihm verbundenen weiteren Lüfter zu dem Lüfter. Zwischen dem Lüfter, dem Zwischenlüfter und dem MESH-Access-Point und/oder dem weiteren Lüfter ist ein Datenverbindungsweg aufgebaut. Dies erhöht die Ausfallsicherheit des gesamten Netzwerks. Zudem können Lüfter untereinander kommunizieren, so dass ein Ausfall eines einzelnen Lüfters auch einfacher detektiert werden kann. Weiterhin werden bei gleichbleibender Ausfallsicherheit weniger MESH-Access-Points benötigt, so dass das Lüftersystem günstiger aufzubauen ist.

Bevorzugt ist der Zwischenlüfter mit einer Mehrzahl von innerhalb desselben MESH-Sende- und Empfangsbereichs liegenden Lüftern verbindbar und dient als Datenknotenpunkt, d.h. der Zwischenlüfter dient als ein Austauschpunkt der Daten oder als ein Kommunikationspunkt der Lüfter untereinander und mit dem MESH-Access-Point.

Weiterhin ist es in diesem Zusammenhang vorteilhaft, wenn der MESH-Access-Point mit dem Zwischenlüfter mittelbar über mindestens einen weiteren Zwischenlüfter verbindbar ist. Der mindestens eine weitere Zwischenlüfter ist folglich zwischen dem Zwischenlüfter und dem MESH-Access-Point geschaltet, so dass ein Datenverbindungsweg vom MESH-Access-Point zu dem weiteren Zwischenlüfter und von dem weiteren Zwischenlüfter zum dem Zwischenlüfter und schließlich vom Zwischenlüfter zu dem Lüfter vorhanden ist.

Vorzugsweise kann das Lüftersystem auch über eine weitere Steuer- und Bedieneinheit verfügen. Diese kann beispielsweise als ein Smartphone, als ein Laptop, als ein Tablet oder als ein Desktop gebildet sein.

Ein Lüfter für ein Lüftersystem, mit einem Controller, der einen Speicher und eine Netzwerkschnittstelle aufweist zur Datenübertragung der im Speicher hinterlegten Daten, zeichnet sich dadurch aus, dass der Controller ausgebildet ist, mit einem MESH-Access-Point ein MESH-Netzwerk zu bilden, zur drahtlosen oder drahtgebundenen Verbindung des Lüfters mit einem weiteren Lüfter des Lüftersystems und/oder zur drahtlosen oder drahtgebundenen MESH-Verbindung zwischen den MESH-Access-Point und dem Lüfter. Derartige Lüfter können ohne großen Aufwand in ein bereits bestehendes Lüftersystem bzw. MESH-Netzwerk integriert werden oder dieses aufbauen.

Insbesondere ist es vorgesehen, dass die Netzwerkschnittstelle als WIFI-Schnittstelle und/oder als Ethernet Schnittstelle gebildet ist. Durch die drahtlose Netzwerkschnittstelle kann das Lüftersystem besonders einfach aufgebaut und gesteuert werden. In einer bevorzugen Ausführungsform weist der Lüfter sowohl eine Netzwerkschnittstelle für ein drahtloses Netzwerk, als auch eine Netzwerkschnittstelle für ein drahtgebundenes Netz auf. Dies erhöht die Flexibilität beim Einsatz der Lüfter.

Zur besseren Kommunikation zwischen den Lüftern und der Steuer- und Bedieneinheit und/oder der Steuer- und Bedieneinheit über den BMS-Gateway, weist der Lüfter zusätzlich eine Modbus-TCP-Schnittstelle auf. Durch die Modbus-TCP Schnittstelle kann die Steuer- und Bedieneinheit und/oder der BMS-Gateway einen Betriebsstatus jedes einzelnen Lüfters, also beispielsweise die Betriebsstunden, die aktuelle Geschwindigkeit, den Motor-Status, die Motortemperatur, den Ist-Wert und den Soll-Wert der Leistung des Lüfters, die Anzahl der erreichbaren MESH-Access-Points, ein Fehlermeldung, einen Ausfall etc. abfragen und entsprechende Einstellungen vornehmen. Die Steuer- und Bedieneinheit und/oder der BMS-Gateway weisen dazu IP-Adressen im selben IP-Adressenbereich auf.

Zur besseren Identifikation der einzelnen Lüfter ist es insbesondere vorgesehen, dass dem Kontroller ein RFID-Tag zugeordnet ist, mit einem Speicher zur Speicherung einer Identifikationsadresse und mit einer Sende- und Empfangseinheit zum Senden und Empfangen der Identifikationsadresse. Durch den RFID-Tag kann jedem Lüfter eine eindeutige Identifikationsadresse zugeordnet werden, um so innerhalb des MESH-Netzwerks Informationen über den Betriebszustand dieses Lüfters abfragen zu können oder auch einzelne Steuerbefehle gezielt an diesen Lüfter abgegeben zu können. Der RFID-Tag kann dabei mit einem einen RFID-Reader aufweisenden mobilen Gerät, beispielsweise einem Smartphone, am Lüfter ausgelesen und auch beschrieben werden. Die Konfiguration des RFID-Tag kann sowohl zum Fertigungszeitpunkt des Lüfters als auch zum Zeitpunkt des Einbaus des Lüfters in die Reinraumdecke stattfinden. In einer alternativen Ausführungsform ist es möglich, dass der RFID-Tag eine Default-Konfiguration, also keine eindeutige Identifikationsadresse aufweist. Dadurch können Lüfter zu Gruppen zusammengefasst und gemeinsam angesteuert werden.

Zur Visualisierung des Betriebszustandes der einzelnen Lüfter ist es vorgesehen, dass jeder Lüfter einen optischen Signalgeber aufweist. Dieser kann als LED gebildet sein, der in Abhängigkeit des Betriebszustandes oder eines aufgetretenen Fehlers mit unterschiedlichen Frequenzen blinkt. Weiterhin kann auch eine Mehrzahl an optischen oder auch akustischen Signalgebern vorgesehen sein.

Die das Verfahren zur Installation eines Lüftersystems betreffende Aufgabe wird erfindungsgemäß durch den Anspruch 1 gelöst, also durch ein Verfahren zur Installation eines Lüftersystems für oder in einem Reinraum mit einer Mehrzahl von Lüftern, denen jeweils eine eindeutige Identifikationsadresse zugeordnet ist, umfassend die folgenden Schritte:
a. Platzieren der Lüfter und mindestens eines mit einer Steuer- und Bedieneinheit drahtlos oder drahtgebunden verbundenen MESH-Access-Points derart, dass ein Sende- und Empfangsbereich eines der Lüfter innerhalb des Sende- und Empfangsbereichs eines weiteres Lüfters oder innerhalb des MESH-Sende- und Empfangsbereichs des MESH-Access-Points liegt
b. Verbinden der Lüfter und des MESH-Access-Points und
c. Identifizieren und Lokalisieren der einzelnen Lüfter im MESH-Netzwerk anhand ihrer Identifikationsadresse durch eine Steuer- und Bedieneinheit.

Wobei vor dem Platzieren oder nach dem Platzieren die Positionen der Lüfter (1) und des mindestens einen MESH-Access-Points durch die folgenden Schritte überprüft und/oder angepasst werden:
- Abfragen einer ersten Übertragungsstärke einer MESH-Verbindung zwischen einem der Lüfter zum nächstliegenden MESH-Access-Point und
- Abfragen einer zweiten Übertragungsstärke einer Verbindung eines der Lüfter zu dem benachbarten Lüftern und
- Ausrichten der Lüfter (1) und des MESH-Access-Points (7) derart, dass bei einer minimierten Anzahl von für das Lüftersystem benötigten Lüftern die erste Übertragungsstärke und die zweite Übertragungsstärke maximiert sind.

Die Lüfter werden dabei bevorzugt in der Decke eines Reinraums installiert. Die Identifikation und Lokalisation der einzelnen Lüfter im MESH-Netzwerk kann dabei durch das Beschreiben des RFID-Tags mittels eines Steuer- und Bediengerätes erfolgen. Jedem der Lüfter wird dabei eine eindeutige IP-Adresse innerhalb des MESH-Netzwerks zugeordnet. Die Position des Lüfters wird über einen im Steuer- und Bediengerät angeordneten Positionserfasser bestimmt und die Identifikationsadresse und die Position an die Steuer- und Bedieneinheit gesendet.

In einer alternativen Ausführungsform erfolgt die Adressierung durch eine Service-PIN-Installation. Hierbei wird ein Magnet über einen Reed-Kontakt am Lüfter gezogen und die Identifikationsadresse des Lüfters an die Steuer- und Bedieneinheit gesendet.

Als Übertragungsstärke wird dabei die Feldstärke bzw. die Empfangsstärke der Daten verstanden. Die Übertragungsstärke kann dabei von jedem Lüfter separat abgerufen werden. Dadurch kann analysiert werden, welcher MESH-Access-Point mit welcher Übertragungsstärke mit dem jeweiligen Lüfter verbunden ist. Das Überprüfen und Ausrichten kann also entweder vorab erfolgen, also vor Einbau der Lüfter vorzugsweise in die Decke des Reinraums oder nach dem Einbau der Lüfter vorzugsweise in die Decke des Reinraums.

In einer weiteren alternativen Ausführungsform ist es möglich, dass die Steuer- und Bedieneinheit das mit ihr verbundene MESH-Netzwerk scannt und die Identifikationsadressen der Lüfter selber vergibt.

Weiterhin ist es auch möglich, dass die Steuer- und Bedieneinheit einen Lüfter nach dem anderen innerhalb des MESH-Netzwerks anhand eines hinterlegten Layouts scannt und vollautomatisch adressiert.

Beispielsweise kann ein Verfahren zum Betrieb eines eine Mehrzahl von Lüftern aufweisenden Lüftersystems und einer das Lüftersystem steuernden Steuer- und Bedieneinheit, wobei das Lüftersystem mindestens einen mit der Steuer- und Bedieneinheit verbundenen MESH-Access-Point aufweist, der ausgestaltet ist, ein MESH-Netzwerk mit den Lüftern auszubilden und dass innerhalb eines MESH-Sende- und Empfangsbereichs mindestens ein als Datenknotenpunkt dienender Zwischenlüfter angeordnet ist, der mit dem MESH-Access-Point mit einer ersten Übertragungsstärke verbindbar ist und mit dem Lüfter mit einer zweiten Übertragungsstärke verbindbar ist, die folgenden Schritte aufweisen:
A1 Aufbau des MESH-Netzwerks durch:
   i) Verbinden des Lüfters mit dem MESH-Access-Point über einen ersten Datenverbindungsweg, wenn der Lüfter innerhalb eines MESH-Sende- und Empfangsbereichs des MESH-Access-Points liegt oder
   ii) Bildung des ersten Datenverbindungsweges durch Verbinden des Zwischenlüfters mit dem Lüfter und dem MESH-Access-Point oder
   iii) Verbinden des Lüfters , wenn der Lüfter außerhalb des MESH-Sende- und Empfangsbereichs des MESH-Access-Points und innerhalb eines Sende- und Empfangsbereichs des weiteren Lüfters angeordnet ist über einen zweiten Datenverbindungsweg mit einem innerhalb des MESH-Sende- und Empfangsbereichs des MESH-Access-Points angeordneten und mit dem MESH-Access-Point verbundenen weiteren Lüfter,
B1 Aufbauen des MESH-Netzwerks und Übertragen der Daten zwischen dem Lüfter und der Steuer- und Bedieneinheit über einen der Datenverbindungswege.

Die Verbindung zwischen den Lüftern und dem MESH-Access-Point ist dabei bevorzugt drahtlos, kann aber auch drahtgebunden erfolgen, wobei sie besonders bevorzugt drahtlos als eine WLAN-Verbindung ausgebildet ist. Hierdurch wird ein Netzwerk mit Lüftern aufgebaut und betrieben, die sowohl innerhalb des MESH-Sende- und Empfangsbereichs des MESH-Access-Points liegen als auch außerhalb. Die Steuer- und Bedieneinheit ist dabei bevorzugt als ein Building Management System gebildet. Die Kommunikation zwischen der Steuer- und Bedieneinheit und jedem einzelnen der Lüfter erfolgt dabei bevorzugt über Modbus-TCP/IP oder über Modbus-UDP. Entsprechende Schnittstellen sind an jedem Lüfter und an der Steuer- und Bedieneinheit und/oder an dem BMS/Gateway ausgebildet.

Innerhalb des MESH-Netzwerks sind nicht nur die Lüfter mit dem MESH-Access-Point verbunden sondern auch die Lüfter miteinander. Dadurch wird eine Vielzahl von Datenverbindungswegen geschaffen, die das MESH-Netzwerk und damit das Lüftersystem auch bei einem Ausfall einzelner Lüfter aufrechterhalten bzw. betreiben. Als Zwischenlüfter werden die Lüfter verstanden, die zwischen einem der Lüfter, die nicht direkt mit dem MESH-Access-Point verbunden sind und einem der MESH-Access-Points angeordnet sind. Zwischen dem Lüfter und dem MESH-Access-Point können auch mehrere Zwischenlüfter angeordnet sein, so dass der erste Datenverbindungsweg gebildet wird durch Verbinden des Zwischenlüfters mit dem Lüfter und mit einem weiteren mit dem MESH-Access-Point verbundenen Zwischenlüfter.

In diesem Zusammenhang ist es vorgesehen, dass bei einem Ausfall oder beim Entfernen eines der Lüfter aus dem Lüftersystem das Verfahren die folgenden Schritte umfasst:
- Trennen der Verbindung zwischen dem Lüfter und einem zu entfernenden oder deaktivierten Lüfter, und
- Neuaufbau des MESH-Netzwerks anhand der Schritte A1 und B1.

Zur einfacheren Erweiterung des Lüftersystems umfasst das Verfahren insbesondere die folgenden Schritte:
- Hinzufügen eines neuen Lüfters in das bestehende Lüftersystem und
- Neuaufbau des MESH-Netzwerks anhand der Schritte A1 und B1.

Um die Datenübertragung zu beschleunigen und um die Datenübertragung an aktuelle Bedingungen anzupassen umfasst das Verfahren insbesondere die folgenden Schritte:
- Erfassen einer Mehrzahl von möglichen Datenverbindungswegen und
- Auswählen des eine minimale Datenübertragungszeit aufweisenden Datenverbindungsweges anhand der Anzahl an benötigten Datenknotenpunkten und der Übertragungsstärke.

Hierdurch wir ein äußerst dynamisches Lüftersystem geschaffen, da zu jedem Zeitpunkt der optimale und schnellste Datenverbindungsweg zwischen einem Lüfter des Lüftersystems und der Steuer- und Bedieneinheit geschaffen wird.

Im Folgenden wird die Erfindung an einem in der Zeichnung dargestellten Ausführungsbeispiel näher erläutert; es zeigen:
- Fig. 1: eine schematische Darstellung eines Lüfters und
- Fig. 2: eine schematische Darstellung eines ein MESH-Netzwerk ausbildendes Lüftersystems.

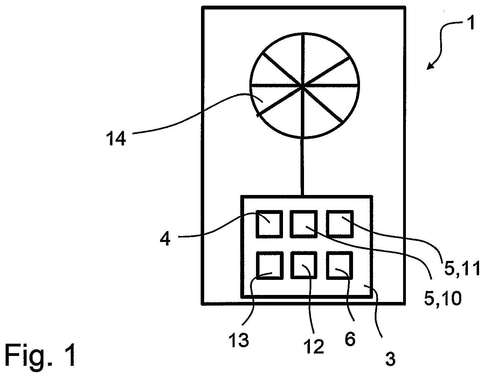

Figur 1 zeigt eine schematische Darstellung eines Lüfters 1 für ein Lüftersystem 2, insbesondere für einen Reinraum. Dieser umfasst einen mit einem Ventilator 14 verbundenen Controller 3, der einen Speicher 4 und eine Netzwerkschnittstelle 5 aufweist zur Datenübertragung der im Speicher 4 hinterlegten Daten. Ebenso umfasst der Controller 3 eine Steuereinheit 6, mittels der der Lüfter 1 betrieben wird. Darüber hinaus ist der Controller 3 ausgebildet, mit einem MESH-Access-Point 7 eine MESH-Netzwerk zu bilden, zur drahtlosen oder drahtgebundenen Verbindung 8 des Lüfters 1 mit einem weiteren Lüfter 1 des Lüftersystems 2 und/oder zur drahtlosen oder drahtgebundenen MESH-Verbindung 9 zwischen dem MESH-Access-Point 7 und dem Lüfter 1.

Als Netzwerkschnittstelle 5 weist der Lüfter 1 eine WIFI-Schnittstelle 10 und eine Ethernet-Schnittstelle 11 auf. Der Lüfter 1 kann folglich sowohl über eine drahtlose Netzwerkverbindung kommunizieren als auch über eine drahtgebundene Netzwerkverbindung. Eine drahtgebundene Netzwerkverbindung erweist sich insbesondere dann als Vorteil, wenn der Lüfter 1 in einem Bereich des Reinraums ohne WIFI-Empfang angeordnet werden soll. Darüber hinaus ist dem Controller 3 ein RFID-Tag 12 mit einem nicht gezeigten Speicher zur Speicherung einer Identifikationsadresse und mit einer nicht dargestellten Sende- und Empfangseinheit zum Senden und Empfangen der Identifikationsadresse zugeordnet. Schließlich weist der Lüfter 1 noch einen optischen Signalgeber 13 zur Anzeige seines Betriebszustands auf. Der optische Signalgeber 13 ist dabei vorzugsweise als eine oder mehrere LEDs gebildet, und ist auch derart ausgebildet verschiedene Fehlermeldungen anhand von unterschiedlichen Blinksignalen zu visualisieren. Alternativ kann der Signalgeber auch als ein akustischer Signalgeber gebildet sein.

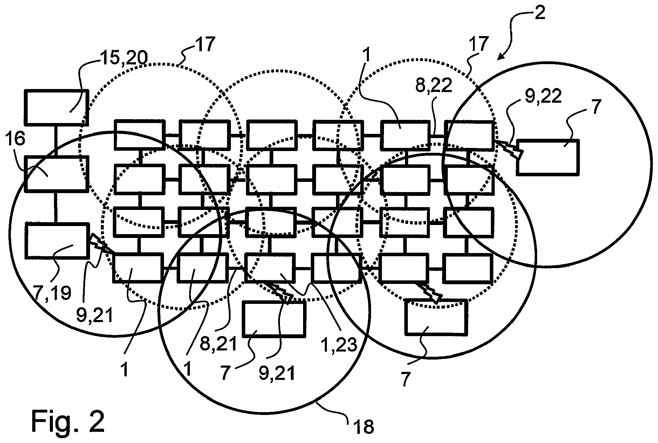

Figur 2 zeigt eine schematische Darstellung des Lüftersystems 2 mit einer als ein Building-Management (BMS) 20 System gebildeten Steuer- und Bedieneinheit 15 zur Steuerung einer Mehrzahl von Lüftern 1. Die Steuer- und Bedieneinheit 15 ist über ein Bussystem mit einem BMS-Gateway 16 verbunden und das BMS-Gateway 16 ist wiederum mit einem ersten MESH-Access-Point 7,19 verbunden. Der MESH-Access-Point 7,19 ist ausgebildet, ein MESH-Netzwerk aufzubauen, derart dass mindestens einer der Lüfter 1 eine drahtlose oder drahtgebundene MESH-Verbindung 9 mit dem MESH-Access-Point 7,19 aufweist, und dass jeder der Lüfter 1 drahtlos oder drahtgebunden mit mindestens einem weiteren Lüfter 1 verbindbar ist. Über das MESH-Netzwerk kann die Steuer- und Bedieneinheit 15 die einzelnen Lüfter 1 steuern bzw. betätigen und jeder der Lüfter 1 kann seinen aktuellen Betriebszustand an die Steuer- und Bedieneinheit 15 senden.

Die einzelnen Lüfter 1 weisen dabei einen räumlichen Sende- und Empfangsbereich 17 auf und sind derart zueinander angeordnet, dass sich innerhalb ihres Sende- und Empfangsbereichs 17 mindestens ein weiterer Lüfter 1 oder ein MESH-Access-Point 7 befindet. Im vorliegenden Ausführungsbeispiel sind die Lüfter 1 und der MESH-Access-Point 7 drahtlos über WIFI miteinander verbunden. Die Sende- und Empfangsbereiche 17 der Lüfter 1 sind dabei als gestrichelte Kreise dargestellt, während ein MESH-Sende- und Empfangsbereich 18 des MESH-Access-Points 7,19 durch Kreise mit einer durchgezogenen Linie dargestellt ist.

Um das Lüftersystem 2 möglichst groß gestalten zu können und um die Erreichbarkeit der einzelnen Lüfter 1 innerhalb des MESH-Netzwerks zu verbessern, weist das Lüftersystem 2 eine Mehrzahl von MESH-Access-Points 7 auf. Im vorliegenden Ausführungsbeispiel umfasst das MESH-Netzwerk insgesamt vier MESH-Access-Points 7, wobei diese derart zueinander angeordnet sind, dass sich ihre MESH-Sende- und Empfangsbereiche 18 überschneiden.

Die Installation des Lüftersystems 2 erfolgt dabei wie folgt: zunächst werden die Lüfter 1 und die MESH-Access-Points 7 innerhalb beispielsweise der Raumdecke des Reinraums derart platziert, dass der Sende- und Empfangsbereich 17 eines jeden Lüfters 1 innerhalb des Sende- und Empfangsbereichs 17 eines weiteren Lüfters 1 oder innerhalb des MESH-Sende- und Empfangsbereichs 18 des MESH-Access-Points 7 angeordnet ist. Mindestens der erste MESH-Access-Point 19 wird über eine Schnittstelle, vorzugsweise eine Ethernet-Schnittstelle mit dem BMS-Gateway 16 verbunden. Dieser wird wiederum über eine Bussystem-Verbindung mit dem Building Management System 20 verbunden.

Als nächstes werden die Lüfter 1 und die MESH-Access-Points 7 miteinander verbunden.

Wahlweise kann vor dem Platzieren der Lüfter 1 in der Reinraumdecke eine Anpassung und/oder Überprüfung der Position oder Ausrichtung der Lüfter 1 und des mindestens einen MESH-Access-Points 7 erfolgen. Dazu wird eine erste Übertragungsstärke einer MESH-Verbindung 9 zwischen einem der Lüfter 1 zum nächstliegenden MESH-Access-Point 7 abgefragt und/oder eine zweite Übertragungsstärke einer Verbindung 8 eines der Lüfter 1 zu den benachbarten Lüftern 1. Die Lüfter 1 werden dann derart zueinander angeordnet dass eine Anzahl der Lüfter innerhalb des Lüftersystems minimiert werden kann, bei dabei maximierter zweiter Übertragungsstärke. Die Übertragungsstärke ist dabei als eine Sende- und Empfangsstärke definiert. Es erfolgt also eine Optimierung des Lüftersystems durch Minimierung der Anzahl an für das Lüftersystem benötigten Lüftern, die dann so zueinander ausgerichtete sind, dass eine möglichst hohe zweite Übertragungsstärke erreicht wird.

Die MESH-Access-Points 7 werden zum einen so ausgerichtet, dass die MESH-Sende- und Empfangsbereiche 18 sich überschneiden, und zum anderen, dass eine Anzahl der für das Lüftersystem benötigten MESH-Access-Points minimiert wird bei Erzielung einer möglichst hohen ersten Übertragungsstärke. In einer alternativen Ausführungsform kann die Anpassung und/oder Überprüfung der Position oder Ausrichtung auch nach dem Platzieren der Lüfter 1 erfolgen.

Schließlich werden die einzelnen Lüfter 1 im Netzwerk anhand ihrer Identifikationsadressen identifiziert. Dies geschieht beispielsweise über den RFID-Tag 12, indem ein einen RFID-Reader aufweisendes und nicht gezeigtes Steuer- und Bediengerät jedem Lüfter 1 eine eindeutige Identifikationsadresse zuordnet und über seine Positionserfassungseinheit dem Building Management System 20 die genaue Identifikationsadresse (IP-Adresse) des Lüfters 1 und seine Position innerhalb des Netzwerks mitteilt.

Der Betrieb und die Überprüfung des Lüftersystems 2 gestalten sich dabei wie folgt:
Das Building Management System 20 steuert und betreibt die Lüfter 1. Die Datenkommunikation zwischen dem Building Management System 20 und den einzelnen Lüftern1 erfolgt dabei durch Datenübertragung über das MESH-Netzwerk. Der Aufbau des MESH-Netzwerks wird dabei exemplarisch anhand eines Lüfters 1 erläutert:
Dabei wird der Lüfter 1 über einen ersten Datenverbindungsweg 21 mit dem nächstgelegenen MESH-Access-Point 7 verbunden, wenn der Lüfter 1 innerhalb des MESH-Sende- und Empfangsbereichs 18 dieses MESH-Access-Points 7 liegt. Wenn der Lüfter 1 außerhalb des MESH-Sende- und Empfangsbereichs 18 des MESH-Access-Points 7 liegt, aber innerhalb eines Sende- und Empfangsbereichs 17 eines weiteren Lüfters 1 angeordnet ist, so wird der Lüfter 1 über einen zweiten Datenverbindungsweg 22 mit dem weiteren Lüfter 1 verbunden. Diese Schritte werden für alle Lüfter 1 des Lüftersystems 2 durchgeführt. Der MESH-Access-Point 7 kann auch drahtlos mit dem MESH Gateway 16 kommunizieren.

Innerhalb des MESH Netzwerks sind nicht nur die Lüfter 1 mit den MESH-Access-Points 7 verbunden, sondern auch die Lüfter 1 untereinander. Benachbarte als ein Zwischenlüfter 23 gebildete Lüfter 1, die innerhalb eines MESH-Sende- und Empfangsbereichs 18 liegen, dienen so als ein Datenknotenpunkt.

Dieser Zwischenlüfter 23 ist mit dem MESH-Access-Point 7 mit einer ersten Übertragungsstärke verbindbar und mit dem Lüfter 1 mit einer zweiten Übertragungsstärke. Alternativ kann ein Zwischenlüfter 23 auch nicht unmittelbar sondern lediglich mittelbar über einen weiteren Zwischenlüfter 23 mit einem der MESH-Access-Points 7 verbunden sein. Der erste Datenverbindungsweg 21 wird durch das Verbinden des oder der Zwischenlüfter 23 mit dem Lüfter 1 und dem MESH-Access-Point 7 gebildet.

Dies ermöglicht, dass ein jeder der Lüfter 1 über viele verschiedene Datenverbindungswege 21,22 mit dem MESH-Access-Point 7 und damit mit dem Building Management System 20 verbunden sein und mit diesem kommunizieren kann. Die MESH-Access-Points 7 erfassen dabei, dass eine Mehrzahl von möglichen Datenverbindungswegen 21,22 möglich ist und wählen den Datenverbindungsweg 21,22 aus, der die minimale Datenübertragungszeit aufweist. Dies geschieht bevorzugt durch Minimierung der Anzahl an benötigten Datenknotenpunkten bei der maximal möglichen Übertragungsstärke.

Mittels des MESH-Netzwerks des Lüftersystems 2 können so Daten über den Betriebszustand an den BMS-Gateway 16 oder an das BMS 20 übertragen werden. Umgekehrt können das BMS 20 oder das BMS-Gateway 16 einzelne Lüfter 1 oder Gruppen von Lüftern 1 ansteuern, um Fehlermeldungen überprüfen zu können oder um den Lüfter 1 selber steuern zu können.

Ein besonderer Vorteil des Lüftersystems 2 ist dabei die Tatsache, dass es keinen Single Point of Failure gibt. Das heißt, sollte ein Lüfter 1 ausfallen durch ein Versagen der Elektronik oder durch Selbstabschaltung aufgrund einer zu hohen Betriebstemperatur, bricht nicht das ganze MESH-Netzwerk und damit auch nicht das ganze Lüftersystem 2 zusammen. Stattdessen ist das Lüftersystem 2 aufgrund des MESH-Netzwerks dynamisch und baut sich stetig neu auf, um den optimalen Datenübertragungsweg 21,22 für den jeweiligen Lüfter 1 zu suchen.

Weiterhin wird das Entfernen eines Lüfters 1 aus und das Hinzufügen eines Lüfters 1 in das Lüftersystem 2 extrem vereinfacht. Dem neuen Lüfter 1 muss lediglich eine neue Identifikationsadresse und eine Position zugeordnet werden und das MESH-Netzwerk muss neu aufgebaut werden. Das Entfernen des Lüfters 1 geht bevorzugt mit einer Fehlermeldung an das BMS 20 oder den BMS-Gateway 16 einher, dass ein Lüfter 1 nicht mehr ansteuerbar ist. Durch einen Neuaufbau des MESH-Netzwerks wird sichergestellt, dass die anderen Lüfter 1 ansteuerbar sind.

### Bezugszeichenliste

- 1: Lüfter
- 2: Lüftersystem
- 3: Controller
- 4: Speicher
- 5: Netzwerkschnittstelle
- 6: Steuereinheit
- 7: MESH-Access-Point
- 8: Verbindung
- 9: MESH-Verbindung
- 10: WIFI-Schnittstelle
- 11: Ethernet-Schnittstelle
- 12: RFID-Tag
- 13: optischer Signalgeber
- 14: Ventilator
- 15: Steuer- und Bedieneinheit
- 16: BMS-Gateway
- 17: Sende- und Empfangsbereich
- 18: MESH-Sende- und Empfangsbereich
- 19: Erster MESH-Access-Point
- 20: Building Management System (BMS)
- 21: 1. Datenverbindungsweg
- 22: 2. Datenverbindungsweg
- 23: Zwischenlüfter

## Patentansprüche

1. Verfahren zur Installation eines Lüftersystems (2) in einem Reinraum mit einer Mehrzahl von Lüftern (1), denen jeweils eine eindeutige Identifikationsadresse zugeordnet ist, umfassend die folgenden Schritte:
a. Platzieren der Lüfter (1) und mindestens eines mit einer Steuer- und Bedieneinheit (15) drahtlos oder drahtgebunden verbundenen MESH-Access-Points (7) derart, dass ein Sende- und Empfangsbereich (17) eines der Lüfter (1) innerhalb des Sende- und Empfangsbereichs (17) eines weiteren Lüfters (1) oder innerhalb des MESH-Sende- und Empfangsbereichs (18) des MESH-Access-Points (7) liegt,
b. Verbinden der Lüfter (1) und des MESH-Access-Points (7) und
c. Identifizieren und Lokalisieren der einzelnen Lüfter (1) im Netzwerk anhand ihrer Identifikationsadresse durch ein Steuer- und Bediengerät,
wobei vor dem Platzieren oder nach dem Platzieren die Positionen der Lüfter (1) und des mindestens einen MESH-Access-Points (7) durch die folgenden Schritte angepasst und/oder überprüft werden:
- Abfragen einer ersten Übertragungsstärke einer MESH-Verbindung (9) zwischen einem der Lüfter (1) zum nächstliegenden MESH-Access-Point (7), und
- Abfragen einer zweiten Übertragungsstärke einer Verbindung (8) eines der Lüfter (1) zu dem benachbarten Lüfter (1) und
- Ausrichten der Lüfter (1) und des MESH-Access-Points (7) derart, dass bei einer minimierten Anzahl von für das Lüftersystem (2) benötigten Lüftern (1) die erste Übertragungsstärke und die zweite Übertragungsstärke maximiert sind.

2. Verfahren nach Anspruch 2, **dadurch gekennzeichnet, dass** die Lüfter (1) in eine Decke des Reinraums installiert werden.

## Claims

1. Method of installing a fan system (2) in a clean room having a plurality of fans (1), each of which is assigned a unique identification address, comprising the following steps:
a. Positioning the fans (1) and at least one MESH access point (7) connected wirelessly or by wire to a control and operating unit (15) in such a way that a transmission and receiving range (17) of one of the fans (1) lies within the transmission and receiving range (17) of a further fan (1) or within the MESH transmission and reception range (18) of the MESH access point (7),
b. Connecting the fans (1) and the MESH access point (7), and
c. Identifying and localizing the individual fans (1) in the network by means of their identification address using a control and operating device,
wherein before placement or after placement, the positions of the fans (1) and of the at least one MESH access point (7) are adjusted and/or checked by the following steps:
- interrogating a first transmission strength of a MESH connection (9) between one of the fans (1) to the nearest MESH access point (7), and
- interrogating a second transmission strength of a connection (8) of one of the fans (1) to the neighboring fan (1), and
- aligning the fans (1) and the MESH access point (7) in such a way that the first transmission strength and the second transmission strength are maximized with a minimized number of fans (1) required for the fan system (2).

2. Method according to claim 1, **characterized in that** the fans (1) are installed in a ceiling of the clean room.

## Revendications

1. Procédé d'installation d'un système de ventilation (2) dans une salle blanche comprenant une pluralité de ventilateurs (1), chacun étant associé à une adresse d'identification unique, comprenant les étapes suivantes :
a. Placer les ventilateurs (1) et au moins un point d'accès MESH (7) relié sans fil ou par fil à une unité de commande et d'utilisation (15) de telle sorte qu'une zone d'émission et de réception (17) de l'un des ventilateurs (1) se trouve à l'intérieur de la zone d'émission et de réception (17) d'un autre ventilateur (1) ou à l'intérieur de la zone d'émission et de réception MESH (18) du point d'accès MESH (7),
b. Relier les ventilateurs (1) et le point d'accès MESH (7) et
c. Identification et localisation des différents ventilateurs (1) dans le réseau à l'aide de leur adresse d'identification par un appareil de commande et d'utilisation,
dans lequel, avant le placement ou après le placement, les positions des ventilateurs (1) et du au moins un point d'accès MESH (7) sont adaptées et/ou vérifiées par les étapes suivantes :
- interrogation d'une première intensité de transmission d'une liaison MESH (9) entre l'un des ventilateurs (1) et le point d'accès MESH (7) le plus proche, et
- interrogation une seconde intensité de transmission d'une connexion (8) de l'un des ventilateurs (1) avec le ventilateur (1) adjacent, et
- orienter les ventilateurs (1) et le point d'accès MESH (7) de telle sorte que, pour un nombre minimal de ventilateurs (1) nécessaires pour le système de ventilation (2), la première intensité de transmission et la deuxième intensité de transmission soient maximisées.

2. Procédé selon la revendication 2, **caractérisé en ce que** les ventilateurs (1) sont installés dans un plafond de la salle blanche.
